(19) Europäisches Patentamt / European Patent Office / Office européen des brevets

(11) **EP 3 780 203 B1**

(12) **EUROPEAN PATENT SPECIFICATION**

(45) Date of publication and mention
of the grant of the patent:
**28.01.2026 Bulletin 2026/05**

(21) Application number: **19774774.4**

(22) Date of filing: **29.03.2019**

(51) International Patent Classification (IPC):
*H01M 8/1004* (2016.01)    *H01M 4/96* (2006.01)
*H01M 8/10* (2016.01)    *H01M 4/86* (2006.01)

(52) Cooperative Patent Classification (CPC):
**H01M 4/8605; H01M 4/8657; H01M 8/1004;**
**Y02E 60/50**

(86) International application number:
**PCT/JP2019/014261**

(87) International publication number:
**WO 2019/189856 (03.10.2019 Gazette 2019/40)**

(54) **MEMBRANE ELECTRODE ASSEMBLY, AND POLYMER ELECTROLYTE FUEL CELL**

MEMBRANELEKTRODENANORDNUNG UND POLYMERELEKTROLYTBRENNSTOFFZELLE

ENSEMBLE MEMBRANE-ÉLECTRODE ET PILE À COMBUSTIBLE À ÉLECTROLYTE POLYMÈRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.03.2018 JP 2018065196**

(43) Date of publication of application:
**17.02.2021 Bulletin 2021/07**

(73) Proprietor: **Toppan Printing Co., Ltd.**
**Tokyo 110-0016 (JP)**

(72) Inventor: **MIMATSU, Ayako**
**Tokyo 110-0016 (JP)**

(74) Representative: **Hoffmann Eitle**
**Patent- und Rechtsanwälte PartmbB**
**Arabellastraße 30**
**81925 München (DE)**

(56) References cited:
JP-A- 2005 183 368    JP-A- 2007 165 205
JP-A- 2011 096 468    JP-A- 2012 059 481
JP-A- 2017 098 083    US-A1- 2007 009 777
US-A1- 2008 299 431    US-A1- 2010 183 941

**Description**

[Technical Field]

The present invention relates to a polymer electrolyte fuel cell including a membrane electrode assembly.

[Background Art]

Fuel cells generate an electric current, that is, generate power through a chemical reaction between hydrogen and oxygen. Fuel cells have attracted attention as a clean energy source that has higher efficiency and lower environmental load and lower noise than conventional power generation systems. In particular, polymer electrolyte fuel cells usable at temperatures close to room temperature are considered promising for application to in-vehicle power sources, household stationary power sources, and the like.

Polymer electrolyte fuel cells typically have a structure in which a large number of single cells are laminated. Each single cell has a structure in which a single membrane electrode assembly is sandwiched between two separators. The membrane electrode assembly includes a polymer electrolyte membrane, a fuel electrode (anode) to which fuel gas is supplied, and an oxygen electrode (cathode) to which an oxidant is supplied. The fuel electrode is bonded to a first surface of the polymer electrolyte membrane, and the oxygen electrode is bonded to a second surface thereof facing away from the first surface. The separator has a gas flow path and a cooling water flow path. The fuel electrode and the oxygen electrode each include an electrode catalyst layer and a gas diffusion layer. The electrode catalyst layer of each of the electrodes is in contact with the polymer electrolyte membrane. The electrode catalyst layer contains a catalyst material such as a platinum group noble metal, a conductive carrier, and a polymer electrolyte. The gas diffusion layer has both gas permeability and conductivity.

Polymer electrolyte fuel cells generate an electric current through the following electrochemical reaction. First, in the electrode catalyst layer of the fuel electrode, hydrogen contained in fuel gas is oxidized by the catalyst material to generate protons and electrons. The generated protons pass through the polymer electrolyte in the electrode catalyst layer and the polymer electrolyte membrane to reach the electrode catalyst layer of the oxygen electrode. The electrons generated simultaneously with the protons pass through the conductive carrier in the electrode catalyst layer, the gas diffusion layer, the separator, and an external circuit to reach the electrode catalyst layer of the oxygen electrode. In the electrode catalyst layer of the oxygen electrode, the protons and the electrons react with oxygen contained in an oxidant gas to generate water (see, for example, Patent Literature 1).

Patent Literature 2 relates to a membrane electrode assembly comprising electrocatalyst layers, an anode and a cathode each made of an electrode substrate, and a polymer electrolyte membrane sandwiched between the anode and the cathode. The reaction resistance of the membrane electrode assembly at 20 °C satisfies a specific expression.

Patent Literature 3 is concerned with a membrane electrode assembly comprising (a) a solid electrolyte polymer membrane; (b) an anode electrocatalyst layer and (c) a cathode electrocatalyst layer. The anode electrocatalyst layer comprises a first electrocatalyst composition, and the cathode layer comprises a second electrocatalyst composition different from the first electrocatalyst composition.

Patent Literature 4 relates to a method for producing a membrane-electrode-gas diffusion layer-gasket assembly 30, wherein a thickness C1 of the cathode side gasket 6 used in the cathode sealing step is in the following relationship with A1 as a thickness of the cathode catalyst layer 2 and B1 as a thickness of the cathode side gas diffusion layer 4.

$$(A1+B1)/C1 \geqq 1.2 \qquad (1)$$

[Citation List]

[Patent Literature]

[PTL 1] JP 5537178 B
[PTL 2] US 2007/0009777 A1
[PTL 3] US 2008/0299431 A1
[PTL 4] US 2010/0183941 A1

[Summary of the Invention]

[Technical Problem]

In order to reduce cost required for fuel cells, fuel cells that can be operated at high output are demanded. However, the operation of a fuel cell at high output generates a large amount of water in the electrode catalyst layer of the oxygen electrode. Thus, flooding occurs, which is a phenomenon in which the generated water overflows in the electrode catalyst layer and the gas diffusion layer of the oxygen electrode, thereby hindering the supply of gas to the electrode catalyst layer of the oxygen electrode. As a result, power generation performance of the fuel cell is reduced.

An object of the present invention is to provide a polymer electrolyte fuel cell capable of improving power generation performance.

[Solution to Problem]

A polymer electrolyte fuel cell comprising a membrane electrode assembly to solve the above problem is as defined in claim 1. Preferred embodiments of the polymer electrolyte fuel cell are the subject of claims 2 to 8.

According to the above configuration, the anode-side electrode catalyst layer that has a large number of pores due to the contained fibrous material has a greater thickness than the cathode-side electrode catalyst layer. Accordingly, transfer of water generated in the cathode-side electrode catalyst layer to the anode-side electrode catalyst layer through the polymer electrolyte membrane is promoted. Thus, flooding in the cathode-side electrode catalyst layer is prevented. Therefore, power generation performance of the polymer electrolyte fuel cell including the membrane electrode assembly can be improved.

In the membrane electrode assembly, the thickness of the anode-side electrode catalyst layer may be 5 $\mu$m or more and 35 $\mu$m or less. According to the above configuration, when the thickness of the anode-side electrode catalyst layer is 5 $\mu$m or more, variation in the thickness of the anode-side electrode catalyst layer is prevented. When the thickness of the anode-side electrode catalyst layer is 35 $\mu$m or less, the cathode-side electrode catalyst layer is prevented from being excessively dried by the transfer of water to the anode-side electrode catalyst layer.

In the membrane electrode assembly, the ratio of the thickness of the anode-side electrode catalyst layer to the thickness of the cathode-side electrode catalyst layer may be 1.1 or more and 3.5 or less. According to the above configuration, when the polymer electrolyte fuel cell including the membrane electrode assembly is operated at a high current, reduction in voltage value of the polymer electrolyte fuel cell is prevented.

In the membrane electrode assembly, the anode-side electrode catalyst layer may be formed of a monolayer. According to the above configuration, the transfer of water to the anode-side electrode catalyst layer is promoted as compared with the case where the anode-side electrode catalyst layer is a multilayer composed of a plurality of layers. When the anode-side electrode catalyst layer is a multilayer, resistance to the transfer of water between the layers is higher than resistance to the transfer of water in the layers, and thus even if the total thickness of the anode-side electrode catalyst layer is the same, the transfer of water to the anode-side electrode catalyst layer is hindered as compared with the case where the anode-side electrode catalyst layer is a monolayer.

In the membrane electrode assembly, the fibrous material may contain at least one of (i) one or more types of electron conductive fibers and (ii) one or more types of proton conductive fibers; and the electron conductive fibers may contain at least one selected from the group consisting of carbon nanofibers, carbon nanotubes, and transition metal-containing fibers.

In the membrane electrode assembly, the transition metal-containing fibers may contain at least one transition metal element selected from the group consisting of Ta, Nb, Ti, and Zr.

In the membrane electrode assembly, the fibrous material may have a fiber diameter of 5 nm or more and 500 nm or less and a fiber length of 1 $\mu$m or more and 200 $\mu$m or less. According to the above configuration, when the fiber length and the fiber diameter of the fibrous material are in these respective ranges, dispersibility of the fibrous material in the electrode catalyst layer can be improved, and the amount of fibrous material added can be in an appropriate range.

In the membrane electrode assembly, the ratio of a mass of the fibrous material to a mass of the conductive carrier may be 0.3 or more and 1.0 or less. According to the above configuration, when the ratio of the mass of the fibrous material to the mass of the conductive carrier is 0.3 or more, reduction in the thickness of the electrode catalyst layer due to reduction in the number of the pores in the electrode catalyst layer is prevented, thereby preventing difficulty in the electrode catalyst layer from being able to store the generated water. As a result, when the ratio of the mass of the fibrous material to the mass of the conductive carrier is 0.3 or more, reduction in output of the polymer electrolyte fuel cell is prevented. If the ratio of the mass of the fibrous material to the mass of the conductive carrier exceeds 1.0, due to an excessively large number of pores in the electrode catalyst layer, conductivity is reduced, thereby reducing the output of the polymer electrolyte fuel cell. When the ratio of the mass of the fibrous material to the mass of the conductive carrier is 1.0 or less, reduction in the output is prevented.

In the membrane electrode assembly, the ratio of a mass of the fibrous material per unit area of the anode-side electrode catalyst layer to a content of the fibrous material per unit area of the cathode-side electrode catalyst layer is 1.2 or more and 4.0 or less. According to the above configuration, when the polymer electrolyte fuel cell including the membrane electrode assembly is operated at a high current, reduction in voltage value of the polymer electrolyte fuel cell is prevented.

[Advantageous Effects of the Invention]

The present invention can improve power generation performance.

[Brief Description of the Drawings]

Fig. 1 is a cross-sectional view showing a structure of a membrane electrode assembly for use in a polymer electrolyte fuel cell according to an embodiment.
Fig. 2 is a schematic diagram showing a structure of an electrode catalyst layer of the membrane electrode assembly shown in Fig. 1.
Fig. 3 is an exploded perspective view showing a structure of a polymer electrolyte fuel cell including the membrane electrode assembly shown in Fig. 1.

[Description of the Embodiments]

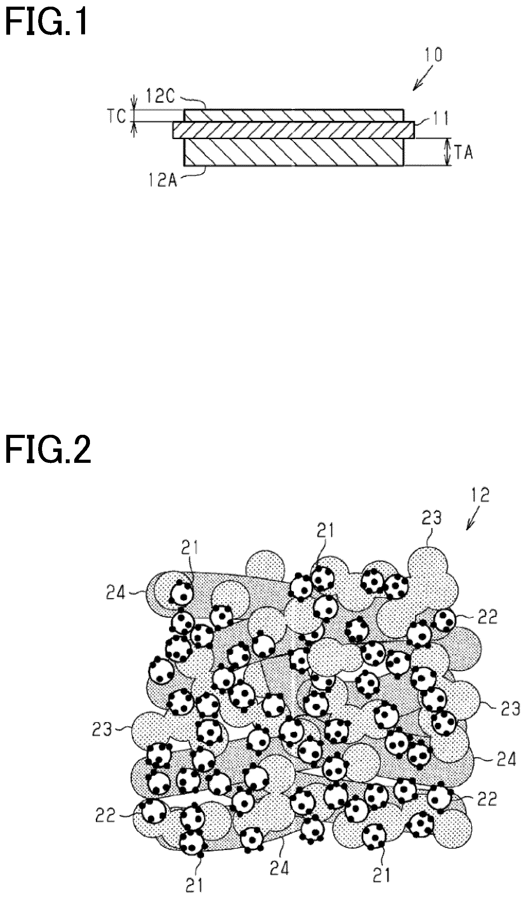

An embodiment of a polymer electrolyte fuel cell and a membrane electrode assembly included therein will be described with reference to Figs. 1 to 3. A configuration of the membrane electrode assembly, a configuration of an electrode catalyst layer, a configuration of the polymer electrolyte fuel cell, and examples will be sequentially described below.

[Configuration of membrane electrode assembly]

The configuration of the membrane electrode assembly will be described with reference to Fig. 1. Fig. 1 shows a cross-sectional structure in a thickness direction of the membrane electrode assembly.
As shown in Fig. 1, a membrane electrode assembly 10 includes a polymer electrolyte membrane 11, a cathode-side electrode catalyst layer 12C, and an anode-side electrode catalyst layer 12A. The polymer electrolyte membrane 11 is a solid polymer electrolyte membrane. The polymer electrolyte membrane 11 has a pair of surfaces facing away from each other. The cathode-side electrode catalyst layer 12C is bonded to one of the pair of surfaces, which is a second surface, and the anode-side electrode catalyst layer 12A is bonded to the other surface, which is a first surface. The anode-side electrode catalyst layer 12A has a greater thickness than the cathode-side electrode catalyst layer 12C. The cathode-side electrode catalyst layer 12C is an electrode catalyst layer that constitutes an oxygen electrode (cathode), and the anode-side electrode catalyst layer 12A is an electrode catalyst layer that constitutes a fuel electrode (anode). An outer peripheral portion of the electrode catalyst layer 12 may be sealed by a gasket (not shown) or the like.
The thickness of the anode-side electrode catalyst layer 12A is a thickness TA. The thickness TA is an average thickness of the entire anode-side electrode catalyst layer 12A. The thickness of the cathode-side electrode catalyst layer 12C is a thickness TC. The thickness TC is an average thickness of the entire cathode-side electrode catalyst layer 12C.
The thickness TA of the anode-side electrode catalyst layer 12A is 5 $\mu$m or more and 35 $\mu$m or less. When the thickness of the anode-side electrode catalyst layer 12A is 5 $\mu$m or more, variation in the thickness of the anode-side electrode catalyst layer 12A is prevented. When the thickness of the anode-side electrode catalyst layer 12A is 35 $\mu$m or less, the cathode-side electrode catalyst layer 12C is prevented from being excessively dried by transfer of water to the anode-side electrode catalyst layer 12A.
A ratio (TA/TC) of the thickness TA of the anode-side electrode catalyst layer 12A to the thickness TC of the cathode-side electrode catalyst layer 12C is preferably 1.1 or more and 3.5 or less, and more preferably 1.9 or more and 3.5 or less. In the case where the ratio (TA/TC) is in the above range, when the polymer electrolyte fuel cell including the membrane electrode assembly 10 is operated at a high current, reduction in voltage value of the polymer electrolyte fuel cell is prevented.
The anode-side electrode catalyst layer 12A is preferably a monolayer. When the anode-side electrode catalyst layer 12A is a monolayer, the transfer of water to the anode-side electrode catalyst layer 12A is promoted as compared with the case where the anode-side electrode catalyst layer 12A is a multilayer composed of a plurality of layers. When the anode-side electrode catalyst layer 12A is a multilayer, resistance to the transfer of water between the layers is higher than resistance to the transfer of water in the layers, and thus even if the total thickness of the anode-side electrode catalyst layer 12A is the same, the transfer of water to the anode-side electrode catalyst layer 12A is hindered as compared with the case where the anode-side electrode catalyst layer 12A is a monolayer.

[Configuration of electrode catalyst layer]

The configuration of the electrode catalyst layer will be described with reference to Fig. 2. An electrode catalyst layer shown in Fig. 2 is applied to each of the anode-side electrode catalyst layer 12A and the cathode-side electrode catalyst layer 12C.

As shown in Fig. 2, the electrode catalyst layer 12 includes a catalyst material 21, a conductive carrier 22, a polymer electrolyte 23, and a fibrous material 24. The conductive carrier 22 supports the catalyst material 21. The anode-side electrode catalyst layer 12A that has a large number of pores due to the contained fibrous material 24 has a greater thickness than the cathode-side electrode catalyst layer 12C. Accordingly, transfer of water generated in the cathode-side electrode catalyst layer 12C to the anode-side electrode catalyst layer 12A through the polymer electrolyte membrane 11 is promoted. Thus, flooding in the cathode-side electrode catalyst layer 12C is prevented. Therefore, power generation performance of the polymer electrolyte fuel cell including the membrane electrode assembly 10 can be improved.

The catalyst material 21 may be formed of a platinum group metal or a metal other than the platinum group metal. Examples of platinum group metals include platinum, palladium, ruthenium, iridium, rhodium, and osmium. Examples of metals other than the platinum group metals include iron, lead, copper, chromium, cobalt, nickel, manganese, vanadium, molybdenum, gallium, and aluminum. The catalyst material 21 may be formed of an alloy, an oxide, a multiple oxide, or the like of these metals. The catalyst material 21 is preferably formed of platinum or a platinum alloy. The catalyst material 21 is particulate, and preferably has a particle size of 0.5 nm or more and 20 nm or less, and more preferably 1 nm or more and 5 nm or less. When the particle size of the catalyst material 21 is 0.5 nm or more, stability of the catalyst material 21 is improved. When the particle size of the catalyst material 21 is 20 nm or less, reduction in activity of the catalyst material 21 is prevented.

The conductive carrier 22 may be, for example, carbon particles which are conductive fine particles and which are not eroded by the catalyst material 21, that is, not consumed by the catalyst material 21 or not degraded by reaction with the catalyst material 21. The carbon particles preferably have a particle size of 10 nm or more and 1000 nm or less, and more preferably 10 nm or more and 100 nm or less. When the particle size of the carbon particles is 10 nm or more, an electron conductive path is more likely to be formed. When the particle size of the carbon particles is 1000 nm or less, an increase in resistance due to the large thickness of the electrode catalyst layer 12 is prevented, and thus reduction in the power generation performance is prevented.

The polymer electrolyte 23 may be an ion conductive polymer electrolyte. In order to improve adhesion between the electrode catalyst layer 12 and the polymer electrolyte membrane 11, the polymer electrolyte 23 is preferably the same electrolyte as or a similar electrolyte to that of the polymer electrolyte membrane 11. The polymer electrolyte 23 may be formed, for example, of a fluororesin or a hydrocarbon resin. The fluororesin may be, for example, Nafion (registered trademark, manufactured by DuPont). The hydrocarbon resin may be, for example, an engineering plastic or a resin obtained by introducing a sulfonic acid group into a copolymer of engineering plastics.

The polymer electrolyte 23 is preferably hydrophilic. When the polymer electrolyte 23 is hydrophilic, the anode-side electrode catalyst layer 12A has higher affinity for water, and thus the anode-side electrode catalyst layer 12A is more likely to store water generated in the cathode-side electrode catalyst layer 12C.

The fibrous material 24 may be formed of electron conductive fibers or proton conductive fibers. Examples of the electron conductive fibers include carbon fibers, carbon nanotubes, carbon nanohorns, and conductive polymer nanofibers. From the viewpoint of conductivity and dispersibility, the fibrous material 24 is preferably formed of carbon nanofibers.

Electron conductive fibers having catalytic activity are more preferable in terms of reducing the amount of noble metal catalyst used. When the electrode catalyst layer 12 is used as the electrode catalyst layer 12 constituting an oxygen electrode, the electron conductive fibers having catalytic activity may be a carbon alloy catalyst made of carbon nanofibers. The electron conductive fibers having catalytic activity may be fibers formed of an electrode active material for a fuel electrode. The electrode active material may be a material containing at least one transition metal element selected from the group consisting of Ta, Nb, Ti, and Zr. Examples of the material containing a transition metal element include a partial oxide of a carbonitride of a transition metal element, a conductive oxide of a transition metal element, and a conductive oxynitride of a transition metal element.

The proton conductive fibers are preferably fibers formed of a proton conductive polymer electrolyte. A material for forming the proton conductive fibers may be a fluorine polymer electrolyte, a hydrocarbon polymer electrolyte, or the like. Examples of the fluorine polymer electrolyte include Nafion (registered trademark) manufactured by DuPont, Flemion (registered trademark) manufactured by Asahi Glass Co., Ltd., Aciplex (registered trademark) manufactured by Asahi Kasei Corporation, and Gore Select (registered trademark) manufactured by Gore. Examples of the hydrocarbon polymer electrolyte include electrolytes such as sulfonated polyether ketones, sulfonated polyether sulfones, sulfonated polyether ether sulfones, sulfonated polysulfides, and sulfonated polyphenylenes. Of these materials, the polymer electrolyte is preferably Nafion (registered trademark) manufactured by DuPont.

The fibrous material 24 may be formed of only one type of the above fibers or two or more types of the above fibers. The fibrous material 24 may be formed of a combination of the electron conductive fibers and the proton conductive fibers. Of the above materials of the fibrous material 24, the fibrous material 24 preferably contains at least one selected from the group consisting of carbon nanofibers, carbon nanotubes, and electrolyte fibers.

The fibrous material 24 preferably has a fiber diameter of 5 nm or more and 500 nm or less, and more preferably 10 nm or more and 300 nm or less. When the fiber diameter of the fibrous material 24 is 5 nm or more and 500 nm or less, the number of pores in the electrode catalyst layer 12 can be increased, and thus the output of the polymer electrolyte fuel cell including the electrode catalyst layer 12 can be improved.

The fibrous material 24 preferably has a fiber length of 1 μm or more and 200 μm or less, and more preferably 1 μm or more and 50 μm or less. When the fiber length of the fibrous material 24 is 1 μm or more and 200 μm or less, strength of the electrode catalyst layer 12 can be improved. Consequently, when the electrode catalyst layer 12 is formed, occurrence of cracking in the electrode catalyst layer 12 is prevented. When the fiber length of the fibrous material 24 is in the above range, the number of pores in the electrode catalyst layer 12 can be increased, and thus the output of the polymer electrolyte fuel cell including the electrode catalyst layer 12 can be improved.

The fibrous material 24 preferably has a fiber diameter of 5 nm or more and 500 nm or less and a fiber length of 1 μm or more and 200 μm or less. When the fiber diameter and the fiber length of the fibrous material 24 are in these respective ranges, dispersibility of the fibrous material 24 in the electrode catalyst layer 12 can be improved, and the amount of fibrous material 24 added can be in an appropriate range.

A ratio (MF/MC) of a mass (MF) of the fibrous material 24 to a mass (MC) of the conductive carrier 22 that supports the catalyst material 21 is more preferably 0.3 or more and 1.0 or less. When the ratio of the mass of the fibrous material 24 to the mass of the conductive carrier 22 is 0.3 or more, reduction in the thickness of the electrode catalyst layer 12 due to reduction in the number of the pores in the electrode catalyst layer 12 is prevented, thereby hindrance to the electrode catalyst layer 12 storing the generated water. As a result, when the ratio of the mass of the fibrous material 24 to the mass of the conductive carrier 22 is 0.3 or more, reduction in the output of the polymer electrolyte fuel cell is prevented. When the ratio of the mass of the fibrous material to the mass of the conductive carrier 22 is 1.0 or less, it is possible to prevent reduction in the output of the polymer electrolyte fuel cell caused by reduction in conductivity due to an excessively large number of pores in the electrode catalyst layer 12. Hereinafter, the mass ratio (MF/MC) is also referred to as first mass ratio.

In the membrane electrode assembly 10, a ratio (MFA/MFC) of a mass (MFA) of the fibrous material 24 per unit area of the anode-side electrode catalyst layer 12A to a mass (MFC) of the fibrous material 24 per unit area of the cathode-side electrode catalyst layer 12C is 1.2 or more and 4.0 or less. In the case where the ratio (TA/TC) is in the above range, when the polymer electrolyte fuel cell including the membrane electrode assembly 10 is operated at a high current, reduction in voltage value of the polymer electrolyte fuel cell is prevented. Hereinafter, the mass ratio (MFA/MFC) is also referred to as second mass ratio.

[Configuration of polymer electrolyte fuel cell]

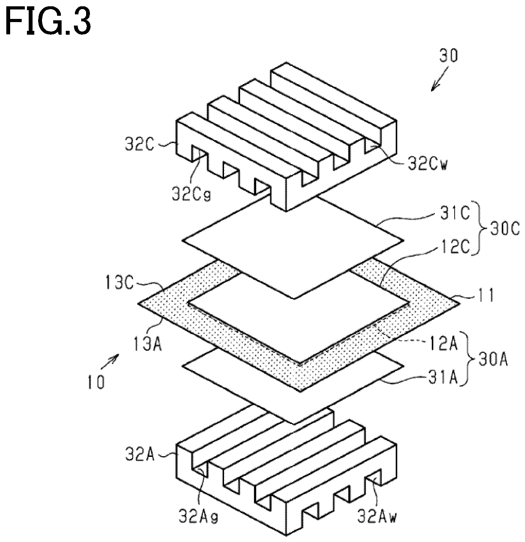

The configuration of the polymer electrolyte fuel cell including the membrane electrode assembly 10 will be described with reference to Fig. 3. The configuration described below is a configuration of an example of the polymer electrolyte fuel cell. Fig. 3 shows a configuration of a single cell of the polymer electrolyte fuel cell. The polymer electrolyte fuel cell may have a configuration including a plurality of single cells that are laminated.

As shown in Fig. 3, a polymer electrolyte fuel cell 30 includes the membrane electrode assembly 10, a pair of gas diffusion layers, and a pair of separators. The pair of gas diffusion layers are a cathode-side gas diffusion layer 31C and an anode-side gas diffusion layer 31A. The pair of separators are a cathode-side separator 32C and an anode-side separator 32A.

The cathode-side gas diffusion layer 31C is in contact with the cathode-side electrode catalyst layer 12C. The cathode-side electrode catalyst layer 12C and the cathode-side gas diffusion layer 31C constitute an oxygen electrode (cathode) 30C. The anode-side gas diffusion layer 31A is in contact with the anode-side electrode catalyst layer 12A. The anode-side electrode catalyst layer 12A and the anode-side gas diffusion layer 31A constitute a fuel electrode (anode) 30A.

In the polymer electrolyte membrane 11, the surface to which the cathode-side electrode catalyst layer 12C is bonded is a cathode-side surface, and the surface to which the anode-side electrode catalyst layer 12A is bonded is an anode-side surface. A portion of the cathode-side surface that is not covered with the cathode-side electrode catalyst layer 12C is an outer peripheral portion. At the outer peripheral portion, a cathode-side gasket 13C is located. A portion of the anode-side surface that is not covered with the anode-side electrode catalyst layer 12A is an outer peripheral portion. At the outer peripheral portion, an anode-side gasket 13A is located. The gaskets 13C and 13A prevent leakage of gas from the outer peripheral portions of the surfaces.

In a thickness direction of the polymer electrolyte fuel cell 30, the cathode-side separator 32C and the anode-side separator 32A sandwich a multilayer formed of the membrane electrode assembly 10 and the two gas diffusion layers 31C and 31A. The cathode-side separator 32C faces the cathode-side gas diffusion layer 31C. The anode-side separator 32A faces the anode-side gas diffusion layer 31A.

A pair of surfaces of the cathode-side separator 32C facing away from each other each have a plurality of grooves. The grooves in one of the pair of surfaces that faces the cathode-side gas diffusion layer 31C form gas flow paths 32Cg. The grooves in the other surface form cooling water flow paths 32Cw.

A pair of surfaces of the anode-side separator 32A facing away from each other each have a plurality of grooves. The grooves in one of the pair of surfaces that faces the anode-side gas diffusion layer 31A form gas flow paths 32Ag. The grooves in the other surface form cooling water flow path 32Aw.

The separators 32C and 32A are formed of a material that is conductive and impermeable to gas.

In the polymer electrolyte fuel cell 30, an oxidant is supplied to the oxygen electrode 30C through the gas flow path 32Cg of the cathode-side separator 32C, and fuel is supplied to the fuel electrode 30A through the gas flow path 32Ag of the anode-side separator 32A. Thus, the polymer electrolyte fuel cell 30 generates power. Examples of the oxidant include air and oxygen. Examples of the fuel include fuel gas containing hydrogen, and organic fuel.

[Method of producing membrane electrode assembly]

A method of producing the membrane electrode assembly 10 will be described below.

The electrode catalyst layer 12 of the membrane electrode assembly 10 can be formed by preparing an electrode catalyst layer slurry, applying the electrode catalyst layer slurry to a substrate or the like, and then drying the electrode catalyst layer slurry.

The catalyst layer slurry contains the catalyst material 21, the conductive carrier 22, the polymer electrolyte 23, the fibrous material 24, and a solvent. The solvent is preferably, for example, a solvent in which the polymer electrolyte 23 can be dispersed or a solvent in which the polymer electrolyte 23 can be dissolved. The solvent may be formed of water, alcohols, ketones, ethers, amines, esters, or the like. Examples of the alcohols include methanol, ethanol, 1-propanol, 2-propanol, 1-butanol, 2-butanol, isobutyl alcohol, and tert-butyl alcohol. Examples of the ketones include acetone, methyl ethyl ketone, methyl propyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, and diisobutyl ketone. Examples of the ethers include tetrahydrofuran, tetrahydropyran, dioxane, diethylene glycol dimethyl ether, anisole, methoxytoluene, diethyl ether, dipropyl ether, and dibutyl ether. Examples of the amines include isopropylamine, butylamine, isobutylamine, cyclohexylamine, diethylamine, and aniline. Examples of the esters include propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate.

The solvent may be formed of acetic acid, propionic acid, dimethylformamide, dimethylacetamide, N-methylpyrrolidone, or the like. The solvent may be a glycol or glycol ether solvent. Examples of the glycol or glycol ether solvent include ethylene glycol, diethylene glycol, propylene glycol, ethylene glycol monomethyl ether, ethylene glycol dimethyl ether, ethylene glycol diethyl ether, diacetone alcohol, 1-methoxy-2-propanol, and 1-ethoxy-2-propanol.

Examples of the method of applying the catalyst layer slurry include doctor blading, die coating, dipping, screen printing, laminator roll coating, and spraying.

Examples of the method of drying the catalyst layer slurry include hot air drying and IR drying. The drying temperature is 40°C or more and 200°C or less, and preferably approximately 40°C or more and 120°C or less. The drying time is 0.5 minutes or more and 1 hour or less, and preferably approximately 1 minute or more and 30 minutes or less.

The method of producing the membrane electrode assembly 10 may be a method in which the electrode catalyst layer 12 is formed on a transfer substrate or a gas diffusion layer, and the electrode catalyst layer 12 is bonded to the polymer electrolyte membrane 11 by thermocompression bonding. Alternatively, the method of producing the membrane electrode assembly 10 may be a method in which the electrode catalyst layer 12 is directly formed on the polymer electrolyte membrane 11. The method in which the electrode catalyst layer 12 is directly formed on the polymer electrolyte membrane 11 is preferable in terms of high adhesion between the polymer electrolyte membrane 11 and the electrode catalyst layer 12 and avoiding the occurrence of crushing of the electrode catalyst layer 12 due to thermocompression bonding.

[Examples]

[Example 1]

First, 20 g of carbon-supported platinum (TEC10E50E, manufactured by Tanaka Kikinzoku Kogyo K.K.) was placed in a container, water was added to the container, and the carbon-supported platinum and water were mixed. The carbon-supported platinum contained 50 mass% of carbon and 50 mass% of platinum, and thus the carbon-supported platinum contained a mass of 10 g of carbon. Then, 1-propanol, a polymer electrolyte (Nafion (registered trademark) dispersion liquid, manufactured by Wako Pure Chemical Industries, Ltd.), and 2.5 g of carbon nanofibers (manufactured by Showa Denko K.K., VGCF (registered trademark), fiber diameter: approximately 150 nm, fiber length: approximately 10 μm) were added to the container and stirred. In this manner, a cathode catalyst layer slurry of Example 1 was obtained.

First, 20 g of carbon-supported platinum (TEC10E50E, manufactured by Tanaka Kikinzoku Kogyo K.K.) was placed in a container, water was added to the container, and the carbon-supported platinum and water were mixed. Then, 1-propanol, a polymer electrolyte (Nafion (registered trademark) dispersion liquid, manufactured by Wako Pure Chemical Industries, Ltd.), and 10 g of carbon nanofibers (manufactured by Showa Denko K.K., VGCF (registered trademark), fiber diameter: approximately 150 nm, fiber length: approximately 10 μm) were added to the container and stirred. In this manner, an anode catalyst layer slurry of Example 1 was obtained. At this time, the amount of obtained anode catalyst layer slurry was equal to the amount of cathode catalyst layer slurry.

The cathode catalyst layer slurry was applied to one surface of a polymer electrolyte membrane (Nafion 212, manufactured by DuPont), and the anode catalyst layer slurry in an amount equal to the amount of cathode catalyst layer slurry was applied to the other surface of the polymer electrolyte membrane. The slurries were applied to the surfaces of the polymer electrolyte membrane by die coating. The polymer electrolyte membrane and the catalyst layer slurries were dried in a furnace at 80°C to obtain a membrane electrode assembly of Example 1.

[Example 2]

A membrane electrode assembly of Example 2 was obtained in the same manner as in Example 1, except that the amount of carbon nanofibers contained in the anode catalyst layer slurry was changed to 6 g.

[Example 3]

A membrane electrode assembly of Example 3 was obtained in the same manner as in Example 1, except that the amount of catalyst layer slurry applied to form an anode-side electrode catalyst layer was changed to 1/2 the amount in Example 1.

[Example 4]

A membrane electrode assembly of Example 4 was obtained in the same manner as in Example 1, except that the carbon nanofibers in the anode catalyst layer slurry were changed to 3 g of carbon nanofibers (manufactured by Zeon Nano Technology Co., Ltd., ZEONANO (registered trademark), fiber diameter: approximately 3 nm, fiber length: in the range of approximately 100 μm or more and 600 μm or less).

[Example 5]

A membrane electrode assembly of Example 5 was obtained in the same manner as in Example 1, except that the carbon nanofibers in the anode catalyst layer slurry were changed to 3 g of carbon fibers (manufactured by Osaka Gas Chemicals Co., Ltd., DONACARBO Milled, fiber diameter: approximately 13000 nm, fiber length: approximately 500 μm).

[Example 6]

The amount of carbon nanofibers in the cathode catalyst layer slurry was changed to 5 g, and the amount of cathode catalyst layer slurry applied to form a cathode-side electrode catalyst layer was changed to 0.8 times the amount in Example 1. The amount of carbon nanofibers in the anode catalyst layer slurry was changed to 4 g, and the amount of catalyst layer slurry applied to form an anode-side electrode catalyst layer was changed to 3 times the amount in Example 1. A membrane electrode assembly of Example 6 was obtained in the same manner as in Example 1 except for the above points.

[Example 7]

A membrane electrode assembly of Example 7 was obtained in the same manner as in Example 1, except that the amount of carbon nanofibers in the cathode catalyst layer slurry was changed to 2 g, and the amount of catalyst layer slurry applied to form a cathode-side electrode catalyst layer was changed to 1.5 times the amount in Example 1.

[Comparative Example 1]

A membrane electrode assembly of Comparative Example 1 was obtained in the same manner as in Example 1, except that the amount of carbon nanofibers in the anode catalyst layer slurry was changed to 3 g.

[Comparative Example 2]

A membrane electrode assembly of Comparative Example 2 was obtained in the same manner as in Example 1, except that no carbon nanofibers were added to the anode catalyst layer slurry, and the amount of anode catalyst layer slurry applied to form an anode-side electrode catalyst layer was changed to 3 times the amount in Example 1.

[Measurement of thickness of electrode catalyst layer]

The thickness in a cross section of the electrode catalyst layer was measured by observation using a scanning electron microscope (SEM).

[Mass of fibrous material per unit area]

For the examples and the comparative examples, the mass of the fibrous material per unit area of the cathode-side electrode catalyst layer and the mass of the fibrous material per unit area of the anode-side electrode catalyst layer were calculated by the following method. Specifically, the amount of conductive carrier per unit area of the electrode catalyst layer was multiplied by the ratio of the amount of added fibrous material to the amount of added conductive carrier during the preparation of the catalyst layer slurry, and the amount of applied catalyst layer slurry, where the amount of applied catalyst layer slurry in Example 1 was 1, thereby calculating the mass of the fibrous material per unit area of each electrode catalyst layer. At this time, the amount of conductive carrier per unit area of the electrode catalyst layer was 0.4 mg/cm$^2$.

The amount of conductive carrier per unit area can be calculated by the following method. First, the mass of each membrane electrode assembly was measured. Next, the anode-side electrode catalyst layer was separated from the membrane electrode assembly by using an adhesive tape, and the mass of the cathode-side electrode catalyst layer and the polymer electrolyte membrane was measured. Then, the mass of the cathode-side electrode catalyst layer and the polymer electrolyte membrane was subtracted from the mass of the membrane electrode assembly to calculate the mass of the anode-side electrode catalyst layer. Subsequently, the cathode-side electrode catalyst layer was separated from the membrane electrode assembly by using an adhesive tape, and the mass of the polymer electrolyte membrane was measured. Then, the mass of the polymer electrolyte membrane was subtracted from the mass of the membrane electrode assembly, and the mass of the anode-side electrode catalyst layer calculated earlier was further subtracted to calculate the mass of the cathode-side electrode catalyst layer. The mass of each electrode catalyst layer was divided by the area of the electrode catalyst layer to calculate the mass of the electrode catalyst layer per unit area. Then, the mass of the electrode catalyst layer per unit area was multiplied by a proportion of the conductive carrier in the solid content of the catalyst layer slurry to calculate the amount of conductive carrier per unit area.

[Measurement of power generation performance]

Power generation performance was measured by a method according to "Cell Evaluation Analysis Protocol", which was a booklet published by New Energy and Industrial Technology Development Organization (NEDO). As a single cell for evaluation, a JARI standard cell was used in which a gas diffusion layer, a gasket, and a separator were disposed on each surface of the membrane electrode assembly and tightened to have a predetermined surface pressure. Then, I-V measurement was performed according to the method described in "Cell Evaluation Analysis Protocol". While an electric current of a polymer electrolyte fuel cell was 1.2 A/cm$^2$, that is, while the polymer electrolyte fuel cell was operated at a high current, the power generation performance was evaluated as "Excellent" when the voltage was 0.6 V or more, the power generation performance was evaluated as "Good" when the voltage was 0.5 V or more and less than 0.6 V, and the power generation performance was evaluated as "Poor" when the voltage was less than 0.5 V.

[Evaluation Results]

Table 1 shows the results of the measurement of the thickness TA of the anode catalyst layer and the measurement of the power generation performance in Examples 1 to 7 and Comparative Examples 1 and 2. Table 1 also shows the first mass ratio. Table 1 also shows the mass of the fibrous material per unit area of the cathode-side electrode catalyst layer, the mass of the fibrous material per unit area of the anode-side electrode catalyst layer, and the second mass ratio. In all Examples 1 to 7 and Comparative Examples 1 and 2, it was found that the thickness TC of the cathode-side electrode catalyst layer was 10 $\mu$m.

[Table 1]

| | Thickness (μm) | Fiber diameter (nm) | Fiber length (μm) | First mass ratio | Fibrous material | | Second mass ratio | Power generation performance |
| --- | --- | --- | --- | --- | --- | --- | --- | --- |
| | | | | | Cathode | Anode | | |
| Example 1 | 35 | 150 | 10 | 1.0 | 0.10 | 0.40 | 4.0 | Excellent |
| Example 2 | 19 | 150 | 10 | 0.6 | 0.10 | 0.24 | 2.4 | Excellent |
| Example 3 | 11 | 150 | 10 | 1.0 | 0.10 | 0.20 | 2.0 | Good |
| Example 4 | 13 | 3 | 100 - 600 | 0.3 | 0.10 | 0.12 | 1.2 | Good |
| Example 5 | 21 | 13000 | 500 | 0.3 | 0.10 | 0.12 | 1.2 | Good |
| Example 6 | 20 | 150 | 10 | 0.4 | 0.16 | 0.48 | 3.0 | Good |
| Example 7 | 22 | 150 | 10 | 1.0 | 0.12 | 0.40 | 3.3 | Good |
| Comparative Example 1 | 3 | 150 | 10 | 0.3 | 0.10 | 0.12 | 1.2 | Poor |
| Comparative Example 2 | 5 | - | - | 0.0 | 0.10 | - | 0.0 | Poor |

As shown in Table 1, it was found that the thickness TA of the anode-side electrode catalyst layer was 35 μm in Example 1, 19 μm in Example 2, and 11 μm in Example 3. Furthermore, it was found that the thickness TA of the anode-side electrode catalyst layer was 13 μm in Example 4, 21 μm in Example 5, 20 μm in Example 6, and 22 μm in Example 7. Furthermore, it was found that the thickness TA of the anode-side electrode catalyst layer was 3 μm in Comparative Example 1, and 5 μm in Comparative Example 2.

It was found that the power generation performance was "Excellent" in the polymer electrolyte fuel cells including the membrane electrode assemblies of Examples 1 and 2, and "Good" in the polymer electrolyte fuel cells including the membrane electrode assemblies of Examples 3 to 7. It was found that even when the thickness TA of the anode-side electrode catalyst layer was increased, the ratio of increase in the voltage to the thickness TA of the anode-side electrode catalyst layer was smaller between Examples 1 and 2 than that between Examples 3 and 2. On the other hand, it was found that the power generation performance was "Poor" in the polymer electrolyte fuel cells including the membrane electrode assemblies of Comparative Examples 1 and 2.

Thus, it was found that in the case where the thickness TA of the anode-side electrode catalyst layer was greater than the thickness TC of the cathode-side electrode catalyst layer, when the polymer electrolyte fuel cell was operated at a high current, the power generation performance of the polymer electrolyte fuel cell was improved.

As shown in Table 1, in Examples 1 and 2, the carbon nanofibers which were an example of the fibrous material had a fiber diameter of 150 nm and a fiber length of 10 μm. In Example 4, the carbon nanofibers which were an example of the fibrous material had a fiber diameter of 3 nm and a fiber length of 100 μm or more and 600 μm or less. In Example 5, the carbon fibers which were an example of the fibrous material had a fiber diameter of 13000 nm and a fiber length of 500 μm.

It was found that the power generation performance was "Excellent" in the polymer electrolyte fuel cells including the membrane electrode assemblies of Examples 1 and 2. On the other hand, it was found that the power generation performance was "Good" in the polymer electrolyte fuel cells including the membrane electrode assemblies of Examples 4 and 5.

As shown in Table 1, it was found that the first mass ratio was 1.0 in Example 1, 0.6 in Example 2, and 1.0 in Example 3. Furthermore, it was found that the first mass ratio was 0.3 in Example 4, 0.3 in Example 5, 0.4 in Example 6, and 1.0 in Example 7. Furthermore, it was found that the first mass ratio was 0.3 in Comparative Example 1, and the second mass ratio was 0 in Comparative Example 2.

As shown in Table 1, it was found that the second mass ratio was 4.0 in Example 1, 2.4 in Example 2, and 2.0 in Example 3. Furthermore, it was found that the second mass ratio was 1.2 in Example 4, 1.2 in Example 5, 3.0 in Example 6, and 3.3 in Example 7. Furthermore, it was found that the second mass ratio was 1.2 in Comparative Example 1, and 0 in Comparative Example 2.

As described above, the present embodiment of the polymer electrolyte fuel cell can achieve the effects listed below.

(1) The anode-side electrode catalyst layer 12A that has a large number of pores due to the contained fibrous material 24 has the thickness TA greater than the thickness TC of the cathode-side electrode catalyst layer 12C. Accordingly, transfer of water generated in the cathode-side electrode catalyst layer 12C to the anode-side electrode catalyst layer 12A through the polymer electrolyte membrane 11 is promoted. Thus, flooding in the cathode-side electrode catalyst layer 12C is prevented. Therefore, the power generation performance of the polymer electrolyte fuel cell 30 including the membrane electrode assembly 10 can be improved.

(2) When the thickness TA of the anode-side electrode catalyst layer 12A is 5 $\mu$m or more, variation in the thickness TA of the anode-side electrode catalyst layer 12A is prevented. When the thickness TA of the anode-side electrode catalyst layer 12A is 35 $\mu$m or less, the cathode-side electrode catalyst layer 12C is prevented from being excessively dried by the transfer of water to the anode-side electrode catalyst layer 12A.

(3) When the polymer electrolyte fuel cell 30 including the membrane electrode assembly 10 is operated at a high current, reduction in voltage value of the polymer electrolyte fuel cell 30 is prevented.

(4) The transfer of water to the anode-side electrode catalyst layer 12A is promoted as compared with the case where the anode-side electrode catalyst layer 12A is a multilayer composed of a plurality of layers.

(5) The electrode catalyst layer 12 can contain fibers having a fiber diameter preferable to form pores in the electrode catalyst layer 12.

The embodiment described above may be appropriately modified and implemented as described below.

The anode-side electrode catalyst layer 12A may be a multilayer composed of a plurality of layers. Also in this case, an effect equivalent to the effect (1) described above can be significantly obtained as long as the total thickness of the anode-side electrode catalyst layer 12A is greater than the thickness of the cathode-side electrode catalyst layer 12C.

[Reference Signs List]

10 ... Membrane electrode assembly
11 ... Polymer electrolyte membrane
12 ... Electrode catalyst layer
12A ... Anode-side electrode catalyst layer
12C ... Cathode-side electrode catalyst layer
13A ... Anode-side gasket
13C ... Cathode-side gasket
21 ... Catalyst material
22 ... Conductive carrier
23 ... Polymer electrolyte
24 ... Fibrous material
30 ... Polymer electrolyte fuel cell
30A... Fuel electrode
30C ... Oxygen electrode
31A ... Anode-side gas diffusion layer
31C ... Cathode-side gas diffusion layer
32A ... Anode-side separator
32Ag, 32Cg ... Gas flow path
32Aw, 32Cw ... Cooling water flow path
32C ... Cathode-side separator

**Claims**

1.   A polymer electrolyte fuel cell comprising a membrane electrode assembly comprising:

a polymer electrolyte membrane having a first surface and a second surface facing away from the first surface;
an anode-side electrode catalyst layer bonded to the first surface; and
a cathode-side electrode catalyst layer bonded to the second surface, wherein
the cathode-side electrode catalyst layer and the anode-side electrode catalyst layer each contain a catalyst material, a conductive carrier that supports the catalyst material, a polymer electrolyte, and a fibrous material, a ratio of a mass of the fibrous material per unit area of the anode-side electrode catalyst layer to a mass of the fibrous material per unit area of the cathode-side electrode catalyst layer is 1.2 or more and 4.0 or less, and
a thickness of the anode-side electrode catalyst layer is greater than a thickness of the cathode-side electrode catalyst layer,
wherein the polymer electrolyte fuel cell further comprises an anode-side gas diffusion layer in contact with the anode-side electrode catalyst layer, and a cathode-side gas diffusion layer in contact with the cathode-side electrode catalyst layer, and
the ratio of a mass of the fibrous material per unit area of the anode-side electrode catalyst layer to the mass of the fibrous material per unit area of the cathode-side electrode catalyst layer is calculated as described in the description.

2. The polymer electrolyte fuel cell according to claim 1, wherein the thickness of the anode-side electrode catalyst layer is 5 $\mu$m or more and 35 $\mu$m or less.

3. The polymer electrolyte fuel cell according to claim 1 or 2, wherein a ratio of the thickness of the anode-side electrode catalyst layer to the thickness of the cathode-side electrode catalyst layer is 1.1 or more and 3.5 or less.

4. The polymer electrolyte fuel cell according to any one of claims 1 to 3, wherein the anode-side electrode catalyst layer is formed of a monolayer.

5. The polymer electrolyte fuel cell according to any one of claims 1 to 4, wherein:

the fibrous material contains at least one of (i) one or more types of electron conductive fibers and (ii) one or more types of proton conductive fibers; and
the electron conductive fibers contain at least one selected from the group consisting of carbon nanofibers, carbon nanotubes, and transition metal-containing fibers.

6. The polymer electrolyte fuel cell according to claim 5, wherein the transition metal-containing fibers contain at least one transition metal element selected from the group consisting of Ta, Nb, Ti, and Zr.

7. The polymer electrolyte fuel cell according to any one of claims 1 to 6, wherein the fibrous material has a fiber diameter of 5 nm or more and 500 nm or less and a fiber length of 1 $\mu$m or more and 200 $\mu$m or less.

8. The polymer electrolyte fuel cell according to any one of claims 1 to 7, wherein a ratio of a mass of the fibrous material to a mass of the conductive carrier is 0.3 or more and 1.0 or less.

**Patentansprüche**

1. Polymerelektrolyt-Brennstoffzelle, die eine Membran-Elektrodenanordnung umfasst, die folgendes umfasst:

eine Polymerelektrolytmembran mit einer ersten Oberfläche und einer zweiten Oberfläche, die von der ersten Oberfläche weg weist;
eine Anodenseiten-Elektrodenkatalysatorschicht, die an die erste Oberfläche gebunden ist; und
eine Kathodenseiten-Elektrodenkatalysatorschicht, die an die zweite Oberfläche gebunden ist, wobei
die Kathodenseiten-Elektrodenkatalysatorschicht und die Anodenseiten-Elektrodenkatalysatorschicht jeweils ein Katalysatormaterial, einen leitfähigen Träger, der das Katalysatormaterial trägt, einen Polymerelektrolyten und ein Fasermaterial enthalten,
das Verhältnis der Masse des Fasermaterials pro Einheitsfläche der Anodenseiten-Elektrodenkatalysatorschicht zu der Masse des Fasermaterials pro Einheitsfläche der Kathodenseiten-Elektrodenkatalysatorschicht 1,2 oder mehr und 4,0 oder weniger ist und
die Dicke der Anodenseiten-Elektrodenkatalysatorschicht größer als die Dicke der Kathodenseiten-Elektrodenkatalysatorschicht ist,
wobei die Polymerelektrolyt-Brennstoffzelle ferner eine Anodenseiten-Gasdiffusionsschicht in Kontakt mit der Anodenseiten-Elektrodenkatalysatorschicht und eine Kathodenseiten-Gasdiffusionsschicht in Kontakt mit der Kathodenseiten-Elektrodenkatalysatorschicht umfasst und
das Verhältnis der Masse des Fasermaterials pro Einheitsfläche der Anodenseiten-Elektrodenkatalysatorschicht zu der Masse des Fasermaterials pro Einheitsfläche der Kathodenseiten-Elektrodenkatalysatorschicht berechnet wird wie in der Beschreibung beschrieben ist.

2. Polymerelektrolyt-Brennstoffzelle gemäß Anspruch 1, in der die Dicke der Anodenseiten-Elektrodenkatalysatorschicht 5 $\mu$m oder mehr und 35 $\mu$m oder weniger ist.

3. Polymerelektrolyt-Brennstoffzelle gemäß Anspruch 1 oder 2, in der das Verhältnis der Dicke der Anodenseiten-Elektrodenkatalysatorschicht zu der Dicke der Kathodenseiten-Elektrodenkatalysatorschicht 1,1 oder mehr und 3,5 oder weniger ist.

**4.** Polymerelektrolyt-Brennstoffzelle gemäß mindestens einem der Ansprüche 1 bis 3, in der die Anodenseiten-Elektrodenkatalysatorschicht aus einer Monoschicht gebildet ist.

**5.** Polymerelektrolyt-Brennstoffzelle gemäß mindestens einem der Ansprüche 1 bis 4, in der:

das Fasermaterial mindestens eines von (i) einer oder mehr Arten von elektronenleitenden Fasern und (ii) einer oder mehr Arten von protonenleitenden Fasern enthält; und
die elektronenleitenden Fasern mindestens einen Vertreter enthalten, ausgewählt aus der Gruppe, bestehend aus Kohlenstoffnanofasern, Kohlenstoffnanoröhren und Übergangsmetall enthaltenden Fasern.

**6.** Polymerelektrolyt-Brennstoffzelle gemäß Anspruch 5, in der die Übergangsmetall enthaltenden Fasern mindestens ein Übergangsmetallelement, ausgewählt aus der Gruppe, bestehend aus Ta, Nb, Ti und Zr enthalten.

**7.** Polymerelektrolyt-Brennstoffzelle gemäß mindestens einem der Ansprüche 1 bis 6, in der das Fasermaterial einen Faserdurchmesser von 5 nm oder mehr und 500 nm oder weniger und eine Faserlänge von 1 μm oder mehr und 200 μm oder weniger hat.

**8.** Polymerelektrolyt-Brennstoffzelle gemäß mindestens einem der Ansprüche 1 bis 7, in der das Verhältnis der Masse des Fasermaterials zu der Masse des leitfähigen Trägers 0,3 oder mehr und 1,0 oder weniger ist.

## Revendications

**1.** Pile à combustible à électrolyte polymère comprenant un ensemble membrane-électrode comprenant :

une membrane d'électrolyte polymère présentant une première surface et une seconde surface située à l'opposé de la première surface ;
une couche de catalyseur d'électrode côté anode solidarisée à la première surface ; et
une couche de catalyseur d'électrode côté cathode solidarisée à la seconde surface, dans laquelle
la couche de catalyseur d'électrode côté cathode et la couche de catalyseur d'électrode côté anode contiennent chacune un matériau catalytique, un support conducteur portant le matériau catalytique, un électrolyte polymère et un matériau fibreux,
le rapport de la masse du matériau fibreux par unité de surface de la couche de catalyseur d'électrode côté anode à la masse du matériau fibreux par unité de surface de la couche de catalyseur d'électrode côté cathode est supérieur ou égal à 1,2 et inférieur ou égal à 4,0, et
l'épaisseur de la couche de catalyseur d'électrode côté anode est supérieure à celle de la couche de catalyseur d'électrode côté cathode,
dans laquelle la pile à combustible à électrolyte polymère comprend en outre une couche de diffusion de gaz côté anode en contact avec la couche de catalyseur d'électrode côté anode, et une couche de diffusion de gaz côté cathode en contact avec la couche de catalyseur d'électrode côté cathode, et
le rapport de la masse du matériau fibreux par unité de surface de la couche de catalyseur d'électrode côté anode à la masse du matériau fibreux par unité de surface de la couche de catalyseur d'électrode côté cathode est calculé tel que décrit dans la description.

**2.** Pile à combustible à électrolyte polymère selon la revendication 1, dans laquelle l'épaisseur de la couche de catalyseur d'électrode côté anode est supérieure ou égale à 5 μm et inférieure ou égale à 35 μm.

**3.** Pile à combustible à électrolyte polymère selon la revendication 1 ou la revendication 2, dans laquelle le rapport de l'épaisseur de la couche de catalyseur d'électrode côté anode à l'épaisseur de la couche de catalyseur d'électrode côté cathode est supérieur ou égal à 1,1 et inférieur ou égal à 3,5.

**4.** Pile à combustible à électrolyte polymère selon l'une quelconque des revendications 1 à 3, dans laquelle la couche de catalyseur d'électrode côté anode est formée d'une monocouche.

**5.** Pile à combustible à électrolyte polymère selon l'une quelconque des revendications 1 à 4, dans laquelle :

le matériau fibreux contient au moins l'un de (i) un ou plusieurs types de fibres conductrices d'électrons et (ii) un ou plusieurs types de fibres conductrices de protons ; et

les fibres conductrices d'électrons contiennent au moins un type sélectionné dans le groupe consistant en des nanofibres de carbone, des nanotubes de carbone et des fibres contenant un métal de transition.

6. Pile à combustible à électrolyte polymère selon la revendication 5, dans laquelle les fibres contenant un métal de transition contiennent au moins un élément de transition sélectionné dans le groupe consistant en Ta, Nb, Ti et Zr.

7. Pile à combustible à électrolyte polymère selon l'une quelconque des revendications 1 à 6, dans laquelle le matériau fibreux présente un diamètre de fibre supérieur ou égal à 5 nm et inférieur ou égal à 500 nm et une longueur de fibre supérieure ou égale à 1 $\mu$m et inférieure ou égale à 200 $\mu$m.

8. Pile à combustible à électrolyte polymère selon l'une quelconque des revendications 1 à 7, dans laquelle le rapport de la masse du matériau fibreux à la masse du support conducteur est supérieur ou égal à 0,3 et inférieur ou égal à 1,0.

# FIG.1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5537178 B
- US 20070009777 A1
- US 20080299431 A1
- US 20100183941 A1